# EUROPÄISCHE PATENTANMELDUNG

(11) **EP 1 702 743 A1**
(43) Veröffentlichungstag der Anmeldung: **20.09.2006**
(21) Anmeldenummer: 05405244.4
(22) Anmeldetag: 15.03.2005
(51) Int. Cl.: B29C 51/16

(54) **Thermoformverfahren, Einlagefolie, Formungslage sowie Kunststoffgegenstand**

(71) Anmelder: Auer, Hans, 8126 Zumikon (CH)
(72) Erfinder: Auer, Hans, 8126 Zumikon (CH)
(74) Vertreter: Ritscher, Thomas

(57) **Zusammenfassung**

Ein Thermoformverfahren, eine Einlagefolie, eine Formungslage sowie ein Kunststoffgebilde, bei dem eine Formungslage (11) aus thermoplastisch verformbarem Polymermaterial in plastischem aber zusammenhängenden Zustand in einer Form (10) gezogen und/oder gepresst und dabei noch in der Form (10) mit einer Einlagefolie (12) verbunden wird, die Grenzschicht (15) zwischen der Formungslage (11) und der Einlagefolie (12) hat eine Strukturierung (18), um die Bildung von Lufteinschlüssen zwischen der Einlagefolie (12) und der Formungslage (11) zu vermeiden.

## Beschreibung

Die Erfindung betrifft allgemein die Herstellung von mit mono- oder polychromatischen Beschriftungen, Bildern und/oder Mustern versehenen, d.h. "dekorierten" Artikeln aus Kunststoff und speziell Formverfahren, die mit Einlagefolien (engl.: in-mould films) arbeiten, wie sie an sich in der Spritzgusstechnik bekannt sind und dabei in eine Form eingelegt werden, wo sie während des Spritzgiessens mit dem in die Form eingespritzten flüssigen Polymermaterial verbunden werden und nach dessen Erstarrung und Entnahme aus der Form auf dem erhaltenen Formgebilde die Dekoration bilden.

Die Verwendung solcher Einlagefolien ist jedoch bisher praktisch auf die verhältnismässig kostspielige Spritzgusstechnik beschränkt. Aus Gründen der Kostenminimierung wäre es wünschbar, Einlagefolien auch mit kostengünstigeren Thermo-Formungsverfahren, wie z.B. Tiefziehverfahren, verwenden zu können. Dies würde jedoch nur unter Vakuumbedingungen zu einer akzeptablen Verbindung der Einlagefolie mit der Formungsfolie führen, was aus wirtschaftlichen Gründen nicht praktikabel ist.

Die zur vorliegenden Erfindung führenden Versuche haben gezeigt, dass es bei einer praxisgerechten Durchführung solcher Thermoformungsverfahren in Gegenwart von Gas bzw. Luft an der Grenzfläche zwischen der plastischen Formungslage und der Einlagefolie zu Gas- bzw. Lufteinschlüssen kommt, die ein normalerweise nicht akzeptables Aussehen der erhaltenen dekorierten Kunststoffartikel zur Folge haben.

Versuche, die Einlagefolien zur Verwendung für Tiefziehverfahren mit feinen Perforationen in gleichmässiger Verteilung zu versehen ("diskontinuierliche" Folien) lieferten bisher Ergebnisse, die für eine kommerzielle Fertigung häufig nicht akzeptabel sind, weil es zu of zu Lufteinschlüssen an der Grenzfläche kommt. Auch Versuche zur Verwendung von Einlagefolien auf Basis von "geschlossenen" ("massiven" oder "kontinuierlichen") Folien, d.h. solchen ohne makroskopische Perforationen, die wegen ihrer molekularen Struktur ausreichend permeabel für Gas bzw. Luft sind, führen nicht zu einer praktikablen Lösung, zumal die im Ergebnis normalerweise praktisch nicht gasdurchlässige Druckschicht diesem Ansatz entgegen wirkt.

Schliesslich führen auch Versuche, die Schmelzeigenschaften der Einlagefolien oder ihrer Oberflächen zu modifizieren, nicht zu einem sicheren Ausschluss der Bildung von Lufteinschlüssen zwischen der Einlagefolie und der für Tiefziehverfahren typischen Formungslage aus bahnförmig zusammenhängender, plastischer Polymermasse.

Dies alles gilt aber nicht nur für Tiefziehverfahren sondern für alle im Vergleich zu Spritzgussverfahren weniger kostspieligen Kunststoff-Formungsverfahren, die allgemein als Thermo-Formungsverfahren bezeichnet werden und bei denen sich nicht wie im Spritzgussverfahren die geschmolzene Masse erst in der Form verfestigt, sondern bei denen eine Lage aus thermoplastisch verformbarer Polymermasse - hier Formungslage genannt - in thermoplastischem aber zusammenhängenden Zustand in eine Form gebracht und in dieser durch Zug- beziehungsweise Sog- oder Druckkräfte der Form angepasst, d.h. ausgeformt wird. Beispiele solcher Verfahren sind ausser dem häufig bevorzugten Tiefziehverfahren das Formpressen, die Vakuumformung, das Gummisackverfahren und die Blasformung.

Aufgabe der Erfindung ist es daher, ein Thermo-Formungsverfahren der eben angegebenen Art zu bieten, d.h. ein solches, bei dem eine zusammenhängende oder kohärente Formungslage aus thermoplastisch verformbarem Polymermaterial in plastischem Zustand in einer Form gezogen oder gepresst und dabei mit einer Einlagefolie verbunden wird, ohne dass es unter normalen Arbeitsbedingungen, d.h. in normaler Atmosphäre, zu Lufteinschlüssen kommt, die zu einem unbrauchbaren Aussehen des erhaltenen dekorierten Kunststoffgebildes führen.

Diese Aufgabe wird gemäss einer ersten allgemeinen Ausführungsform der Erfindung durch ein Formverfahren mit den Merkmalen von Anspruch 1 gelöst. Bevorzugte Ausführungsformen des erfindungsgemässen Verfahrens haben die Merkmale der Ansprüche 2 - 6.

Gemäss einer weiteren Ausführungsform bietet die Erfindung modifizierte Einlagefolien und Formungslagen mit den Merkmalen der Ansprüche 7 und 9 mit den bevorzugten Ausführungsformen gemäss den Ansprüchen 8 und 10.

Gemäss einer Dritten Ausführungsform bietet die Erfindung ein Thermo-Formungsverfahren zur Herstellung von dekorierten Kunststoffgebilden mit den Merkmalen von Anspruch 11 mit den bevorzugten Ausführungsformen gemäss den Ansprüchen 12 - 14.

Schliesslich bietet die Erfindung dekorierte Kunststoffgebilde mit den Merkmalen von Anspruch 15.

Überraschenderweise wurde in den zur Erfindung führenden Untersuchungen gefunden, dass sich die Bildung von Lufteinschlüssen bei Verwendung von Einlagefolien bei Tiefzieh- und ähnlichen Formverfahren, die nicht wie das Spritzgussverfahren mit praktisch flüssiger Polymermasse sondern mit kohärenten aber in thermisch plastifiziertem Zustand verformten Polymerlagen arbeiten, Lufteinschlüsse durch eine vorgängige Strukturierung der Grenzfläche zwischen der Einlagefolie und der Formungslage vermeiden lassen.

In der Praxis wird hierzu gemäss der Erfindung die Oberfläche der Einlagefolie und/oder der Formungslage, z.B. durch Prägen, Pressen, Walzen und dergleichen Formverfahren strukturiert, und zwar im allgemeinen so, dass die Strukturierung praktisch nur an der Grenzfläche, aber praktisch nicht an den Flächen auftritt, die am fertigen Kunststoffgebilde "aussen" liegen, d.h. an der Aussen- oder Innenseite der erhaltenen Kunststoffgebilde.

Das erfindungsgemässe Formverfahren kann sowohl zur Herstellung von praktisch ebenen oder gleichmässig, d.h. flächig gekrümmten Gebilden, z.B. durch Walzen, als auch zur Herstellung von stark profilierten Gegenständen, wie Bechern, Geschirr, Verpackungen und dergleichen angewendet werden, insbesondere und gemäss einer bevorzugten Ausführungsform durch Tiefziehen.

Als Polymermaterial werden hier allgemein synthetische makromolekulare Substanzen, einzeln oder in Mischungen und mit oder ohne Zusätze, wie Weichmacher, Füllstoffe, Pigmente, Stabilisatoren, Modifikatoren, Flammhemmittel, UV-Filter und dergleichen verstanden, wie sie für Thermo-Formungsverfahren bekannt und üblich sind. Der Polymeranteil solcher Massen kann aus Homopolymeren, Copolymeren oder Polymermischungen bestehen und zusammen mit allfälligen Zusätzen zu Folien oder Platten verarbeitet werden, die sich mindestens vorübergehend in einen thermoplastischen Zustand bringen lassen, wie dies meist durch Erwärmen einer vorgeformten Kunststofflage oder ―folie oder aber durch Weiterverarbeiten einer noch in thermisch plastischem Zustand vorliegenden Polymerlage unmittelbar anschliessend an ihre Herstellung, z.B. durch Walzen oder Giessen erzielt wird.

Typische nicht abschliessende Beispiele für die Polymerkomponente solcher Massen sind Polyalkane, wie Polyethylen und Polypropylen, Polyvinylpolymere, wie modifizierte Polystyrole, Polycarbonate, Polyester, Polyether, thermoplastische Polyurethane und dergleichen.

Typische Dicken der Formungslage liegen im Bereich von 100 µm bis 50 mm, wobei jedoch weder die untere noch die obere Grenze kritisch ist und von verschiedenen Parametern, wie Formtiefe, Formgrösse und dem Verwendungszweck der daraus herzustellenden Formteile abhängt. Dabei können sowohl einheitliche Formungslagen als auch solche aus mehreren Komponenten verwendet werden, wie sich durch Co-Extrusion oder andere Verfahren zur Herstellung von mehrschichtigen oder beschichteten Lagen aus Polymermaterial erhältlich sind.

Als Einlagefolien (engl.: in-mold films) sind hier zunächst prinzipiell alle Folien dieser Art geeignet, wie sie für Spritzgussverfahren bereits verwendet werden. verwendet werden. Dabei können sowohl einlagige als auch mehrlagige Folien verwendet werden, wie sie durch Co-Extrusion, Extrusionsbeschichtung oder anderen bekannten Verfahren erhalten werden können. Obwohl bevorzugte Einlagefolien für die Erfindung im wesentlichen aus thermoplastischer Polymermasse bestehen, ist dies insofern nicht kritisch, als auch andere Folien einschliesslich von solchen aus Metall, wie Aluminium, für das erfindungsgemässe Verfahren brauchbar sind, wenn wie strukturierte Flächen besitzen bzw. sich durch entsprechende Verfahren mit einer strukturierten Oberfläche versehen lassen und mindestens auf der Seite, welche mit der Formungslage die Grenzfläche bilden soll, eine Beschichtung mit einer Polymermasse aufweist, die mit der Polymermasse der Formungslage kompatibel und vorzugsweise verschmelzbar ist. Typische Dicken solcher Folien liegen im Bereich zwischen etwa 10 µm und etwa 1000 µm, die in einer für Einlagefolien üblicher Weise bedruckt sind, um den damit hergestellten Artikeln das gewünschte Aussehen zu geben.

Für die Erfindung als Einlagefolien geeignete Folien sind bekannt und im Handel erhältlich. Sie werden vor der Verwendung nach unterschiedlichen Verfahren, z.B. Tief-, Flexo-, Sieb-, Offset- und Buchdruck aber auch auf andere Weise, z.B. durch Sublimationsdruck oder photooptische Verfahren mit der gewünschten Dekoration bzw. Beschriftung versehen, und zwar auf der Seite, die im fertigen Gebilde an einer Aussenseite liegt, da die meisten Druckfarben die Bildung einer festen Verbindung verhindern. Ausnahmsweise, z.B. bei gerasterten Drucken oder mit entsprechend bindungsfähigen Druckfarbenmassen ist es allerdings auch möglich, die Dekorschicht an der Seite aufzubringen, die mit der Formungslage verbunden werden soll. Die Einlagefolie kann auch Beschichtungen aufweisen, die wie z.B. Beschichtungen mit Haftvermittler das Oberflächenverhalten in einer gewünschten Weise modifizieren, beispielsweise um die Benetzbarkeit für das Polymermaterial des Formkörpers zu erhöhen und/oder der Aussenseite des Formkörpers bestimmte Oberflächeneigenschaften zu verleihen. Die bekannten Einlagefolien mit Selbstklebeschichten hingegen werden für die Erfindung nicht bevorzugt.

Erfindungsgemäss ist die Grenzschicht zwischen Formungslage und Einlagefolie strukturiert, um die Bildung von Lufteinschlüssen zwischen diesen Schichten zu vermeiden. Dies bedeutet, dass zum Zeitpunkt des Zusammenführens der Formungslage mit der Einlagefolie die Formungslage selbst und/oder die Einlagefolie im Bereich des Kontaktes miteinander, d.h. jeweils an der einander zugewandten Seite, an ihrer Oberfläche eine solche Struktur aufweisen.

Es wurde gefunden, dass Lufteinschlüsse mit ganz unterschiedlichen regelmässigen oder unregelmässigen Oberflächenstrukturen der Formungslage oder/und der Einlagefolie erzielt werden können. Allgemein wird als "Struktur" eine nicht völlig planare sondern eine solche Oberfläche verstanden, die verteilte Erhebungen ("Berge") und Einsenkungen ("Täler") besitzt.

Für viele Zwecke der Erfindung ist eine Strukturtiefe der jeweiligen Oberfläche von mindestens etwa 1 µm und vorzugsweise mehr als 5 µm, insbesondere mindestens etwa 10 µm geeignet. Als "Strukturtiefe" wird dabei die in Längeneinheiten angegebene Differenz zwischen der obersten gemeinsamen Ebene aller "Berge" und der untersten gemeinsamen Tiefe aller "Täler" bezeichnet. Wenn sowohl die Formungslage als auch die Einlagefolie strukturiert ist, sind auch entsprechend kleinere Werte geeignet. Die Strukturtiefe kann jedoch auch höher als eben angegeben liegen, wenn das Polymermaterial der Formungslage entsprechend fliessfähig ist. Das Optimum der Strukturtiefe kann für gegebene Polymermaterialien mit wenigen einfachen Versuchen festgestellt werden.

Um Lufteinschlüsse sicher zu vermeiden, sollte die Strukturierung praktisch frei von geschlossenen Bereichen sein, d.h. mit anderen Worten ein "offenes Muster" bilden. Damit soll eine Oberflächenstruktur charakterisiert werden, bei der die höchsten, in einer gemeinsamen Ebene liegenden Berge miteinander keine ringförmigen oder polygonalen "Teiche" oder "Seen" bilden.

Typische Beispiele von Strukturen werden anhand der Zeichnungen noch eingehender erläutert. Modellhaft als Beispiel einer erfindungsgemäss geeigneten Struktur ist ein Feld aus gleichförmigen Kegeln oder Pyramiden, deren Spitzen gemeinsam eine höchste gemeinsame Ebene definieren und wobei alle Räume zwischen den Kegeln oder Pyramiden miteinander räumlich in Verbindung stehen. Dies bedeutet jedoch nicht, dass die Struktur geometrisch gleichförmig oder homogen sein muss. Vielmehr können auch völlig unregelmässige Strukturen verwendet werden, sofern sie ein durchwegs "offenes Muster" bilden.

Die Strukturierung der für den gegenseitigen Kontakt im Formungswerkzeug bestimmten Oberfläche der Formungslage oder/und der Einlagefolie kann mit ganz unterschiedlichen Methoden und Werkzeugen erzielt werden. Die Formungslage kann z.B. in thermisch plastifiziertem Zustand, vorzugsweise im Zuge der Fertigung oder der Durchführung des Thermo-Formungsverfahrens durch ein Walzenpaar geführt werden, von denen die eine das Negativ der gewünschten Oberflächenstruktur bildet und die andere eine glatte Oberfläche hat.

Andererseits kann die für den gegenseitigen Kontakt im Formungswerkzeug bestimmte Oberfläche der Formungslage auch in nicht-plastischem Zustand mit der gewünschten Struktur versehen werden, z.B. durch Prägen in kaltem Zustand oder durch Kontakt mit einem geheizten Werkzeug.

Die Einlagefolie kann vor oder nach dem Bedrucken mit der gewünschten Struktur versehen werden, z.B. durch Prägen oder Pressen zwischen einem Walzenpaar, von denen die eine Walze mit einem Muster versehen ist oder eine Auflage aus einem gemusterten Material ausreichender Festigkeit trägt und die andere Walze eine glatte Oberfläche besitzt.

Die Oberflächenstrukturierung kann bei der Durchführung des erfindungsgemässen Verfahrens erhalten bleiben, z.B. wenn die Strukturierung sich nur auf der Formungslage befindet oder wenn das thermoplastische Material der Formungslage die Strukturierung der Einlagefolie ausfüllt. Für das Ergebnis der Verbindung ist dies jedoch im allgemeinen nicht von Belang.

Hingegen ist es wie bereits kurz erwähnt zweckmässig und allgemein bevorzugt, dass das Polymermaterial der Formungslage mit dem Polymermaterial der Formungslage mindestens kompatibel, d.h. verschmelzbar bzw. verklebbar ist, um eine praktisch nur durch Zerstörung lösbare Verbindung zu erreichen. Die Bedeutung und das Ausmass der Kompatibilität der Polymermaterialien von Formungslage und Einlagefolie sind jedoch beim erfindungsgemässen Verfahren meist weniger kritisch, als bei den bekannten sogenannten Inmould-Spritzgussverfahren mit Einlagefolien.

Für die Durchführung des erfindungsgemässen Formverfahrens können die für diese Verarbeitungstechnik bekannten und im Handel erhältlichen Warmformungsanlagen, z.B. Tiefzieh- oder Formpresswerkzeuge verwendet werden, die den Fachleuten bekannt sind und daher keiner besonderen Erläuterung bedürfen. Für das Einführen der Einlagefolien können die aus der Inmould-Spritzgusstechnik bekannten und im Handel erhältlichen Vorrichtungen, z.B. Einlegeroboter verwendet werden und auch hierzu kann auf das Wissen der Fachleute verwiesen und auf eine ausführlichere Erläuterung verzichtet werden. Man kann aber auch ab Rolle arbeiten und die entsprechend mit Struktur versehenen Labels z.B. durch Stanzen oder andere Schneidverfahren im Formwerkzeug oder vor diesem bilden.

Mit dem erfindungsgemässen Verfahren zur Herstellung von Kunststoffgebilden können Artikel für völlig unterschiedliche Zwecke hergestellt werden, z.B. für dekorierte und/oder beschriftete Konsumartikel, wie Becher, Flaschen, Dosen für Lebensmittel oder andere Verpackungszwecke, für Blisterpackungen, Deckel Einlagen und Trays, Gehäuse, Kaschierteile, Sportgeräte, Klappverpackungen, Kühlschränke, Modellbau, Sanitärartikel, Schalen, Skinverpackungen, Teller, Werbe- und Lernmittel, für die Innenausstattung von Land- oder Luftfahrzeugen und für viele andere Gebrauchsgegenstände.

In den beigeschlossenen Zeichnungen zeigen:
Figur 1 die schematische Darstellung einer Thermoformung;
Figur 2 die schematische Ansicht einer Einrichtung zur Strukturierung einer Einlagefolie;
Figur 3 die schematische Ansicht einer Einrichtung zur Strukturierung einer Formungsfolie;
Figur 4 eine halb-schematische, stark vergrösserte perspektivische Darstellung einer strukturierten Oberfläche einer erfindungsgemässen Formungslage oder/und Einlagefolie, und
Figuren 5 A - G verschiedene Beispiele strukturierter Oberflächen.

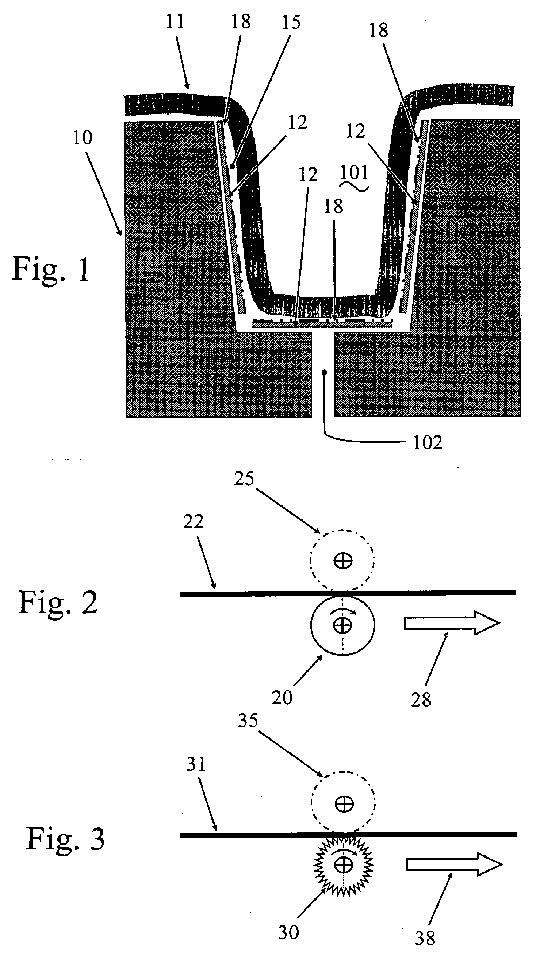

Fig. 1 erläutert schematisch ein Form- bzw. Tiefziehverfahren. Die Formungslage 11 ist als Folge eines vorgängigen Herstellungsschrittes oder durch Erwärmung auf eine Temperatur im Erweichungsbereich des Polymermaterials gebracht, so dass die Formungslage noch kohärent und handhabungsfähig ist. Sie wird in das Werkzeug 10 und wahlweise durch einen (nicht dargestellten) Stempel, durch Anlegen eines Unterdrucks durch die Leitung 101 oder mittels eines (nicht dargestellten) Gummisacks in den Formhohlraum 101 gezogen bzw. gepresst oder geblasen.

Im Formraum ist die Einlagefolie 12 an den Wandungen der Form 10 und oder an deren Boden eingelegt. Sofern mit einem Saugformverfahren gearbeitet wird und die Form 10 Saugöffnungen 102 besitzt, ist es nicht erfoderlich, die Einlagefolie im Bereich der Saugöffnungen zu strukturieren, sofern die Saugwirkung ausreicht, um Lufteinschlüsse zwischen der Einlagefolie und der Formunglage zu vermeiden.

Beim (nicht dargestellten) Ausformen legt sich die Formungslage 11 an die Formwandungen und verschmilzt oder verklebt mit der Einlagefolie 12. Die Oberfläche der Einlagefolie 12 ist an der mit der Formungslage in Berührung kommenden Seite mit einer Struktur 18 versehen, wodurch sich die Luft im Zwischenraum 18 beim Ausformen verdrängen lässt, ohne Lufteinschlüsse zwischen der Formungslage 11 und der Einlagefolie 12 zu bilden. Die bei Formen der schematisch in Fig. 1 dargestellten Art üblichen Stempel bzw. Rückhalter für thermisch plastisch gemachte Formlage sind der Einfachheit nicht gezeichnet.

Allgemein können die für Thermoformverfahren üblichen Massnahmen angewendet und die dazu üblichen Vorrichtungen bzw. Werkzeuge verwendet werden, wobei die Formeinlagefolien nicht nur an planar gekrümmten Flächen sondern auch an kalottenförmig gewölbten Flächen angelegt werden können. da sie in der Regel mindestens in begrenztem Masse verformbar sind.

Wie in Figur 2 schematisch dargestellt, kann die Einlagefolie 12 bzw. 22 dadurch strukturiert werden, dass sie in der durch den Pfeil 28 angedeuteten Arbeitsrichtung durch ein Walzenpaar 20,25 geführt wird, dessen eine Walze z.B. glatt und dessen andere Walze ein Muster aus Vorsprüngen besitzt, die dem Negativ der zu erzeugenden Struktur auf der Einlagefolie 22 entspricht.

In ähnlicher Weise kann auch die Formungslage 11 bzw. 31 entsprechend der schematischen Darstellung von Figur 3 zur Bildung der gewünschten Struktur über eine Profilierungswalze 30 geführt werden, falls gewünscht unter dem Druck einer glatten oder ebenfalls profilierten Gegenwalze 35.

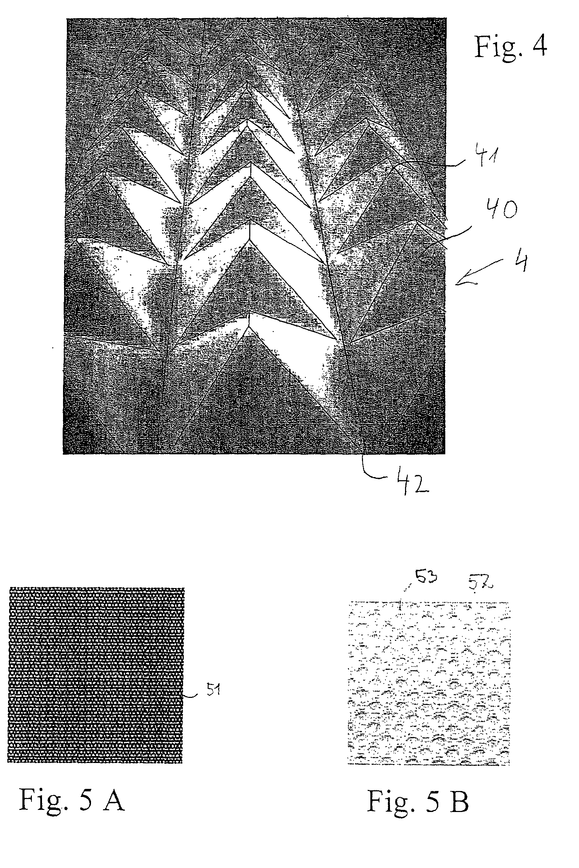

Fig. 4 zeigt in halbschematischer perspektivischer Darstellung eine Struktur 4, wie sie erfindungsgemäss auf der Kontaktseite der Einlagefolie oder/und der Kontaktseite der Formlage gebildet wird, um den Einschluss von Luft bei der Ausformung zu verhindern. Die Tiefe der in Fig. 4 dargestellten Struktur ist durch den Abstand zwischen der Ebene, in der die Spitzen 41 der Pyramiden 40 liegen, und der gemeinsamen Ebene der zwischen den Pyramiden verlaufenden Täler 42 definiert. Diese Strukturtiefe beträgt in der Regel mindestens etwa 5 µm, kann aber auch ein Mehrfaches dieses Wertes betragen und z.B. im Bereich von 10 - 50 µm liegen.

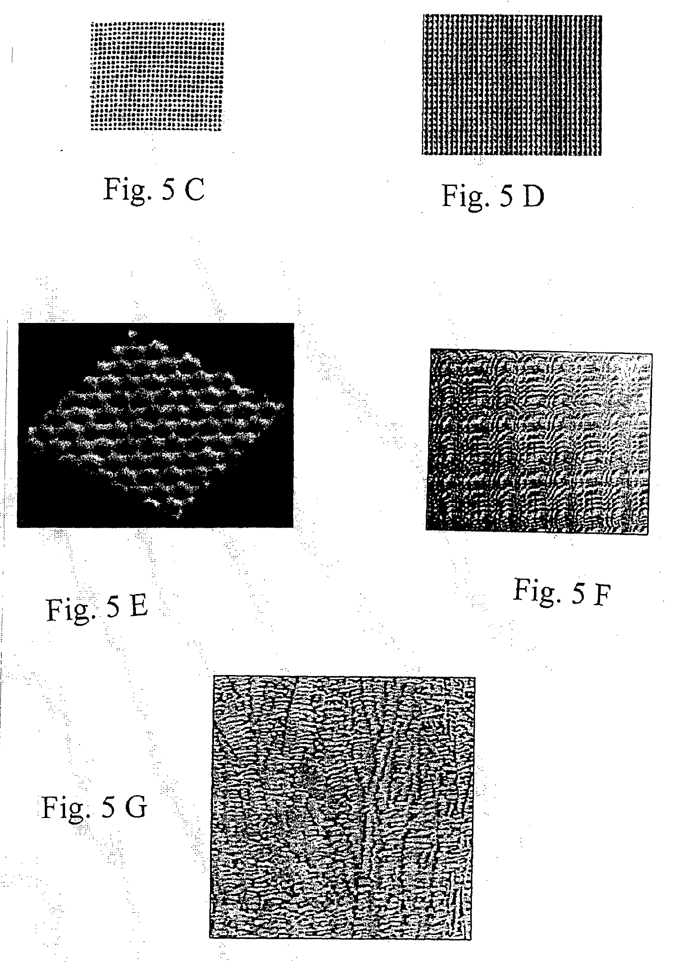

In den Figuren 5 A, 5B, 5C, 5D, 5E und 5 F sind einige nicht abschliessende Beispiele für Strukturen dargestellt, wie sie erfindungsgemäss zur Verhinderung der Bildung von Lufteinschlüssen zwischen der Einlagefolie und der Formlage verwendet werden können und jeweils mindestens auf einer der beteiligten Formschichten, d.h. der Einlagefolie oder/und der Formungslage vorgesehen werden.

Fig. 5A ist ein Siebabdruckmuster, wie es dadurch gebildet werden kann, dass auf der zur Strukturbildung verwendeten Walze 20 (Fig. 2) ein Sieb aus Metalldraht, z.B. aus rostfreiem Stahl, oder Kunststoff-Monofilamenten, z.B. aus Teflon, oder eine oberflächen-profilierte Strukturierungslage liegt, wobei die Oberflächenstruktur des Siebes bzw. der Strukturierungslage beim Durchlaufen des Walzenpaares 20,25 in die Einlagefolie eingedrückt bzw. eingeprägt wird.

Fig. 5B zeigt ein weiteres Beispiel einer Struktur, die aus ovalen Erhebungen 52 und zwischen diesen verlaufenden und miteinander verbundenen Tälern oder Kanälen 53 gebildet wird.

Die Strukturen der Figuren 5C und 5D zeigen weitere Beispiel von Sieb-Abdruckmustern ähnlich Fig. 5A.

Fig. 5E illustriert ein waffelartiges Muster, das ähnlich durch "Berge" und Täler" definiert ist, wie das Muster von Fig. 4. Die Fig. 5F und 5G sind unregelmässige Muster, wie sie etwa durch Prägen einer Einlagefolie mittels einer Walze mit unregelmässig aufgerauhter Oberfläche gebildet werden können.

Insgesamt sollen die Figuren 5A - 5G verdeutlichen, dass ganz unterschiedliche Strukturmuster verwendet werden können und die Optimierung jeweils entsprechend den verwendeten Materialien, Materialdicken, Formgrössen und den Verfahrensbedingungen an Hand von einfachen Versuchen ermittelt werden kann.

Die Erfindung wird nachfolgend anhand von nicht beschränkenden Beispielen erläutert.

### Beispiel 1

Eine kommerziell von der Firma Treofan Germany GmbH, Raunheim, Deutschland, unter der Bezeichnung EUH erhältliche weisse Folie aus orientiertem Polypropylen (OPP) mit einer Dicke von 75 µm zur Verwendung als bedruckbare Einlagefolie für PP- oder PE-Spritzguss wurde in einem Druckwerk geprägt, indem auf die glatte Walze ein Sieb aus einander überkreuzenden Teflon©fäden mit einer Dicke von etwa 0.2 mm gelegt und die Folie bei einer Druckspannung von 0.2 zwischen der mit dem Sieb belegten Walze und der Gegenwalze mit Gummibelag geprägt wurde, so dass die eine Seite der Folie als Prägung eine offene Strukturierung entsprechend dem Siebmuster mit einer Tiefe von etwa 30 µm zeigte und die andere Seite nur leicht verformt war.

Die so erhaltene strukturierte Folie wurde manuell in einer Tiefziehmaschine der Firma Adolf Illig, Heilbronn, Deutschland mit einer Formungslage aus nicht orientiertem Polypropylen mit einer Dicke von 1000 µm in üblicher Weise nach den Betriebsvorschriften der Herstellerfirma durch Tiefziehen zu einem Becher geformt.

Die Einlagefolie war bei dem entstandenen Becher gleichmässig und ohne Lufteinschlüsse mit der Formungslage verbunden.

### Beispiel 2 (Vergleich)

Es wurde in gleicher Weise wie in Beispiel 1 gearbeitet, jedoch ohne Prägung der Einlagefolie.

Der so durch Tiefziehen erhaltene Becher zeigt grossflächige Lufteinschlüsse und war für kommerzielle Zwecke unbrauchbar.

### Beispiel 3

Es wurde wie in Beispiel 1 mit folgenden Abänderungen gearbeitet: die Formungslage aus nicht orientiertem Polypropylen mit einer Dicke von 1000 µm wurde vor der Einführung in die Tiefziehanlage aber bereits in thermisch plastifiziertem Zustand über eine Rolle geführt, deren Oberfläche aus einem Muster von kleinen, aneinander grenzenden negativen Pyramiden in einer Dichte von etwa 60 Einsenkungen pro cm² versehen war, so dass die Unterseite der Formungslage annähernd der Darstellung in Figur 4 entsprach. Ferner wurde die in Beispiel 1 beschriebene Folie, jedoch im ursprünglichen und beidseitig glatten Zustand verwendet.

Der erhaltene Becher zeigte zwischen der Einlagefolie und der Formungslage keine Lufteinschlüsse.

### Beispiel 4

Ähnliche Ergebnisse wie in den vorangehenden Beispielen werden erhalten, wenn die im fertigen Becher aussen liegende Fläche der Einlagefolie durch Siebdruck (bitte prüfen) mit einer mehrfarbigen Dekoration versehen war.

### Beispiel 5

Ähnliche Ergebnisse wie in den vorangehenden Beispielen werden erhalten, wenn anstelle einer Formungsfolie aus Polypropylen eine solche aus HD-Polyethylen verwendet wird.

### Beispiel 6

Gleichwertige Ergebnisse wie in den vorangehenden Beispielen werden auch erhalten, wenn anstelle einer OPP-Folie eine solche aus einem zur Verwendung für Tiefziehverfahren modifizierten Polymer auf Basis von Polystyrol und als Formungslage eine aus einem damit kompatiblen Polystyrolpolymer verwendet wird.

Die obigen Beispiele dienen lediglich der Erläuterung. Für Fachleute ergeben sich ohne weiteres zahlreiche Abänderungen der oben erläuterten erfinderischen Lehre zur Verwendung von Einlagefolien (Inmould films) in Thermoformverfahren der oben angegebenen Art. Wie Fachleuten bekannt, werden solche Verfahren in der Regel mit Mehrfachformen durchgeführt, die 20, 40, 80 oder mehr Formkörper in einem Takt herstellen können und mit Taktzeiten von 10 - 40 pro Minute arbeiten. In diesem Fall sind für das Einbringen der Einlagefolien entsprechend leistungsfähige Automaten erforderlich, wie dies aus der Spritzgusstechnik an sich bekannt ist. Ferner können ausser den oben genannten thermoplastisch verarbeitbaren synthetischen Polymermassen auch solche aus biologisch abbaubaren Werkstoffen, wie thermoplastischen Polymilchsäuren verwendet werden.

Soweit in der vorliegenden Beschreibung Zahlenangaben mit Ausdrücken wie "etwa", "circa" oder "ungefähr" qualifiziert sind bedeutet dies eine zulässige Abweichung von ± 50% vom angegebenen Wert.

## Patentansprüche

1. Formverfahren, bei dem eine Formungslage (11) aus thermoplastisch verformbarem Polymermaterial in zusammenhängendem aber plastischem Zustand geformt und dabei mit einer Einlagefolie (12) verbunden wird, wobei die Grenzschicht (15) zwischen der Formungslage (11) und der Einlagefolie (12) eine Strukturierung (18) aufweist, um die Bildung von Lufteinschlüssen zwischen der Einlagefolie (12) und der Formungslage (11) zu vermeiden.

2. Formverfahren nach Anspruch 1, **dadurch gekennzeichnet, dass** die Strukturierung (18) auf derjenigen Seite der Einlagefolie (12) gebildet ist, welche der Formungslage (11) zugewendet ist.

3. Formverfahren nach Anspruch 1 oder 2, **dadurch gekennzeichnet, dass** die Strukturierung (18) auf der Seite der Formungslage (11) gebildet ist, welche der Einlagefolie (12) zugewendet ist.

4. Verfahren nach einem der Ansprüche 1 - 3, **dadurch gekennzeichnet, dass** die Strukturierung (18) der Einlagefolie (12) und/oder der Formungslage (11) vorgängig zum Formverfahren, z. B. durch Prägen oder Pressen, gebildet wird.

5. Verfahren nach einem der Ansprüche 1 - 3, **dadurch gekennzeichnet, dass** die Strukturierung (18) der Formungslage (11) im Zuge des Formverfahrens gebildet wird, z. B. indem die Formungslage (11) vor dem Zuführen zur Form (10), aber vorzugsweise bereits in thermoplastischem Zustand, mittels einer Form- oder Prägewalze strukturiert wird.

6. Verfahren nach einem der Ansprüche 1 - 5, **dadurch gekennzeichnet, dass** die Strukturierung (18) praktisch frei von geschlossenen Bereichen ist und eine mittlere Tiefe von mehr als 1 µm und vorzugsweise von mehr als 5 µm aufweist.

7. Einlagefolie (12) für ein Thermoformungsverfahren, bei dem eine Formungslage (11) aus thermoplastisch verformbarem Polymermaterial in plastischem Zustand in einer Form (10) gezogen und/oder gepresst und noch in der Form (10) mit einer Einlagefolie (12) verbunden wird, wobei die Einlagefolie (12) auf einer Seite eine strukturierte Oberfläche mit einem offenen Muster aus Auswölbungen und/oder Einsenkungen besitzt, um den Einschluss von Luftblasen beim Verbinden der Einlagefolie (12) mit der Formungslage (11) zu vermeiden.

8. Einlagefolie (12) nach Anspruch 7, **dadurch gekennzeichnet, dass** die Strukturierung (18) der Oberfläche der Einlagefolie (12) praktisch frei von geschlossenen Bereichen ist und eine mittlere Tiefe von mehr als 1 µm und vorzugsweise von mehr als 5 µm aufweist

9. Formungslage (11) für ein Thermoformungsverfahren, bei dem eine Formungslage (11) aus thermoplastisch verformbarem Polymermaterial in plastischem Zustand in einer Form (10) gezogen und/oder gepresst und noch in der Form (10) mit einer Einlagefolie (12) verbunden wird, wobei die Formungslage (11) auf einer Seite eine strukturierte Oberfläche mit einem offenen Muster aus Auswölbungen und/oder Einsenkungen besitzt, um den Einschluss von Luftblasen beim Verbinden der Einlagefolie mit der Formungslage zu vermeiden.

10. Formungslage (11) nach Anspruch 9, **dadurch gekennzeichnet, dass** die Strukturierung (18) der Oberfläche der Formungslage (11) praktisch frei von geschlossenen Bereichen ist und eine mittlere Tiefe von mehr als 1 µm und vorzugsweise von mehr als 5 µm aufweist.

11. Verfahren zur Herstellung von Kunststoffgebilden durch ein Thermoformungsverfahren, insbesondere Tiefziehverfahren, bei dem eine Formungslage (11) aus thermoplastisch verformbarem Polymermaterial in plastischem Zustand in einer Form (10) zur Ausformung des Kunststoffgebildes gezogen und/oder gepresst und/oder geblasen und dabei in der Form mit einer Einlagefolie (12) verbunden wird, wobei dass die Grenzschicht (15) zwischen der Formungslage (11) und der Einlagefolie (12) eine Strukturierung (18) aufweist, um die Bildung von Lufteinschlüssen zwischen der Einlagefolie und der Formungslage (11) zu vermeiden.

12. Verfahren nach Anspruch 11, **dadurch gekennzeichnet, dass** die Strukturierung (18) auf derjenigen Seite der Einlagefolie (12) gebildet ist, welche der Formungslage (11) zugewendet ist, oder/und die Strukturierung (18) auf derjenigen Seite der Formungslage (11) gebildet ist, welche der Einlagefolie (12) zugewendet ist.

13. Verfahren nach einem der Ansprüche 11 oder 12, **dadurch gekennzeichnet, dass** die Strukturierung (18) der Einlagefolie (12) und/oder der Formungslage (11) vorgängig zum Formverfahren, z. B. durch Prägen oder Pressen, gebildet wird, wobei die Strukturierung (18) praktisch frei von geschlossenen Bereichen ist und eine mittlere Tiefe von mehr als 1 µm und vorzugsweise von mehr als 5 µm aufweist.

14. Verfahren nach einem der Ansprüche 11 - 13, **dadurch gekennzeichnet, dass** die Strukturierung (18) der Formungslage (11) im Zuge des Formverfahrens gebildet wird, z. B. indem die Formungslage (11) vor dem Zuführen zur Form (10), aber vorzugsweise bereits in thermoplastischem Zustand, mittels einer Form- oder Prägewalze strukturiert wird, wobei die Strukturierung (18) praktisch frei von geschlossenen Bereichen ist und eine mittlere Tiefe von mehr als 1 µm und vorzugsweise von mehr als 5 µm aufweist.

15. Kunststoffgebilde, hergestellt nach einem Thermoformungsverfahren, bei dem eine Lage (11) aus thermoplastisch verformbarem Polymermaterial in plastischem Zustand in einer Form (10) zur Formung des Kunststoffgebildes gezogen und/oder gepresst und dabei noch in der Form mit einer Einlagefolie (12) verbunden wird, wobei die Grenzschicht (15) zwischen der Formungslage (11) und der Einlagefolie (12) eine Strukturierung (18) aufweist, um die Bildung von Lufteinschlüssen zwischen der Einlagefolie (12) und der Formungslage (11) zu vermeiden.
